# EUROPÄISCHE PATENTSCHRIFT

(11) **EP 4 435 550 B1**
(45) Veröffentlichungstag und Bekanntmachung des Hinweises auf die Patenterteilung: **10.12.2025**
(21) Anmeldenummer: 24164366.7
(22) Anmeldetag: 19.03.2024
(51) Int. Cl.: G01C 21/34, G05D 1/246, G05D 1/644, G05D 105/28, G05D 107/70, G05D 109/10

(54) **VERFAHREN ZUR BESTIMMUNG EINER FAHRSTRECKE FÜR MINDESTENS EIN SELBSTSTÄNDIG FAHRENDES MOBIL, MANÖVERAUTOMAT, COMPUTERPROGRAMM SOWIE SOFTWAREPRODUKT**
METHOD FOR DETERMINING A ROUTE FOR AT LEAST ONE AUTONOMOUSLY DRIVING MOBILE MANEUVER MACHINE, COMPUTER PROGRAM AND SOFTWARE PRODUCT
PROCÉDÉ DE DÉTERMINATION D'UNE TRAJECTOIRE POUR AU MOINS UN MOBILE SE DÉPLAÇANT DE MANIÈRE AUTONOME, AUTOMATE DE MAN UVRE, PROGRAMME INFORMATIQUE ET PRODUIT LOGICIEL

(30) Priorität: 22.03.2023 DE 102023202583
(43) Veröffentlichungstag der Anmeldung: 25.09.2024
(73) Patentinhaber: Robert Bosch GmbH, 70442 Stuttgart (DE)
(72) Erfinder: Leberle, Urs, 70806 Kornwestheim (DE); Hinderer, Moritz, 70174 Stuttgart (DE); Vorderer, Marian Marcel, 71277 Rutesheim (DE); Ungen, Marc, 71272 Renningen (DE); Diessner, Christian, 75417 Muehlacker-Muehlhausen (DE); Betzitza, Thomas, 75365 Calw (DE); Marx, Christoph, 73072 Donzdorf (DE); Kampert, David, 73773 Aichwald (DE); Fisel, Johannes, 76137 Karlsruhe (DE)

(56) Entgegenhaltungen:
- IT-A1- 201900 011 520
- US-A1- 2019 361 450
- US-A1- 2021 020 045

## Beschreibung

### Stand der Technik

In der Produktionstechnik werden Produkte und Produktbauteile z.T. von automatisierten Systemen transportiert. Beispielsweise werden die Produkte oder Produktbauteile von einem Bearbeitungsplatz zum nächsten gefahren. Hierfür werden z. T. selbständig fahrende Vehikel verwendet, die sich ohne eine starre Führung (bspw. Schiene) bewegen können. Derartige Vehikel existieren in unterschiedlichen Größen, die mehr oder weniger schnell fahren, mehr oder weniger Produkte transportieren und mehr oder weniger lange Strecken zurücklegen. Die Kontrolle der Vehikel erfolgt üblicherweise über ein Softwaresystem.

Die Druckschrift IT 2019 0001 1520 A1 betrifft Techniken zum Planen einer Bewegungsbahn, der ein Straßenfahrzeug folgt, die durch einen Fahrzeugzustand definiert ist, der Positionsinformationen und Orientierungsinformationen umfasst, die mit einer Steuereingabe durch ein differentielles kinematisches Modell in Beziehung stehen, wobei ein Satz von Steuereingabebeschränkungen und ein Satz von Zustandsbeschränkungen gegeben sind, wobei die Bewegungsbahn einen gegebenen Anfangszustand und einen gegebenen Zielzustand verbindet, und wobei das Verfahren das Erhalten der Bewegungsbahn durch Berechnen einer Zustandstrajektorie umfasst, die eine Folge von Fahrzeugzuständen umfasst, die durch eine gegebene Anzahl jeweiliger Pfadsegmente, insbesondere unterschiedlicher Typen, verknüpft sind, die aus einem gegebenen endlichen Satz unterschiedlicher Typen von Bewegungsprimitiven ausgewählt werden, die das Straßenfahrzeug in einer gegebenen Manöverzeit ausführen kann, und wobei der Berechnungsvorgang das Minimieren funktionaler Kosten über die Typen von Pfadsegmenten umfasst, aus denen die Zustandstrajektorie besteht, wobei die funktionalen Kosten eine Summe bedingter Bewegungskosten über die Anzahl der Typen von Pfadsegmenten umfassen.

Die Offenlegung der Druckschrift US 2019/361450 A1 umfasst Techniken zur Entwicklung effizienter Bewegungsprimitive mit ungefähren Pfadkoordinaten, die für eine schnelle Planung in Szenarien mit autonomem Fahren geeignet sind. Bei diesen Grundelementen handelt es sich insofern um Näherungswerte, als dass bestimmte Größen wie Weglänge, Beschleunigung und Spurversatztrajektorie mit einem gewissen Grad an Sicherheit bekannt sind und Werte, die von der Krümmung des Referenzpfads abhängen, gebunden werden können. Solche ungefähren Bewegungsprimitive können verwendet werden, um das autonome Fahrzeug so zu steuern, dass es der Flugbahn in einer Umgebung folgt.

Die Druckschrift US 2021/020045 A1 offenbart ein autonomes Fahrzeugleitsystem, das einen Pfad zur Steuerung eines autonomen Fahrzeugs zumindest teilweise auf Grundlage einer Datenstruktur generiert, die zumindest teilweise auf Grundlage von Sensordaten generiert wird, die den belegten Raum in einer Umgebung um ein autonomes Fahrzeug herum angeben können. Das Leitsystem kann ein Raster empfangen und ein mit dem Raster und der Datenstruktur verknüpftes Raster erzeugen. Das Leitsystem kann zusätzlich oder alternativ das Raster (in Quer- und/oder Längsrichtung) dynamisch unterabtasten, zumindest teilweise basierend auf Merkmalen, die aus der Datenstruktur bestimmt wurden. Das Leitsystem kann einen Pfad zumindest teilweise basierend auf einem Satz vorkalkulierter Bewegungsprimitive, den damit verbundenen Kosten und/oder einem heuristischen Kostendiagramm identifizieren, das die niedrigsten Kosten für die Bewegung von einer Pose zur anderen angibt.

### Offenbarung der Erfindung

Die Erfindung betrifft ein Verfahren zur Bestimmung einer Fahrstrecke, insbesondere eines Transportwegs, für mindestens ein selbstständig fahrendes, unbesetztes Mobil. Die Erfindung betrifft auch einen Manöverautomaten, ein Computerprogramm sowie ein Softwareprodukt.

Bevorzugte oder vorteilhafte Ausführungen der Erfindung ergeben sich aus den Unteransprüchen, der Beschreibung und/oder der beigefügten Figuren.

Die Erfindung betrifft ein Verfahren zur Bestimmung, insbesondere Berechnung, einer Fahrstrecke, insbesondere eines Transportwegs, für mindestens ein selbstständig fahrendes, insbesondere unbesetztes Mobil. Das Mobil ist insbesondere als ein autonomes Fahrzeug ausgebildet. Alternativ ist das Mobil als ein schwebendes oder fliegendes Mobil ausgebildet. Insbesondere ist das Mobil menschenfrei ausgebildet. Alternativ oder ergänzend ist das Mobil ausgebildet, ausschließlich Güter oder dergleichen zu transportieren. Beispielsweise ist das Mobil als ein Transportroboter, Niederflurfahrzeug etc. realisiert. Bevorzugte Bezeichnungen sind AGV (Automated Guided Vehicle) und/oder FTF (Fahrerloses Transportfahrzeug). Diese Erfindung betrifft insbesondere entsprechende Mobile, die kleine Mengen schnell über kurze Distanzen transportieren und bevorzugt zum Transport innerhalb einer Produktionslinie verwendet werden. Optional werden als Mobile auch Züge aus einem Zugmobil und einer Reihe von Anhängern eingesetzt.

Die Fahrstrecke, insbesondere der Transportweg, weist einen Ausgangspunkt und einen Zielpunkt als Knoten auf. Der Ausgangspunkt bildet beispielsweise eine Beladestelle des Mobils, der Zielpunkt bildet beispielsweise eine Entladestelle des Mobils. Optional kann die Fahrstrecke bzw. der Transportweg auch noch weitere Zwischenpunkte, wie z.B. Via-Punkte, aufweisen, wobei die Zwischenpunkte beispielsweise als Zwischenstationen ausgebildet sind.

Dem Mobil ist ein insbesondere mobilspezifischer Datensatz an Bewegungsprimitiven zugeordnet. Insbesondere umfasst der Datensatz mindestens drei, vorzugsweise mindestens fünf, im Speziellen mindestens sieben Bewegungsprimitive. Die Bewegungsprimitive bilden einfache Grundbewegungen des Mobils ab. Jedes der Bewegungsprimitive weist einen Startpunkt und einen Endpunkt auf, wobei der Startpunkt und der Endpunkt mit einer Trajektorie verbunden ist. Startpunkt und Endpunkt bilden somit die Knoten, welche über die Trajektorie verbunden sind.

Die Trajektorie ist insbesondere als die tatsächliche und/oder physikalische Trajektorie des Mobils ausgebildet.

Im Rahmen der Erfindung wird vorgeschlagen, dass die Fahrstrecke, insbesondere der Transportweg, auf Basis der Bewegungsprimitive bestimmt wird. Es wird somit vorgeschlagen, dass die Fahrstrecke/ der Transportweg aus einer Aneinanderreihung von Bewegungsprimitiven gebildet wird, die die Grundbewegungen des Mobils repräsentieren. Diese Vorgehensweise hat den Vorteil, dass die Fahrstrecke/ der Transportweg nicht als eine beliebig ausgebildete Freiform realisiert sein kann, sondern aus den Grundformen der Bewegungsprimitive ausgebildet ist. Durch die Reduktion der Bewegungsfreiheit des Mobils auf die Bewegungsprimitive werden somit die Anzahl der möglichen, unterschiedlichen die Fahrstrecken/ Transportwege deutlich reduziert, so dass die entsprechenden Bestimmungsalgorithmen zur Bestimmung der Fahrstrecke/ des Transportwegs weniger Rechenaufwand benötigen und dadurch effizienter arbeiten können. Insbesondere können andere Verfahren zur die Fahrstrecken-/ Transportwegberechnung eingesetzt werden, die nicht Wegpunkt-basiert sind. Im Unterschied zu den Wegpunkt-basierten Methoden wird der Weg viel exakter berechnet und hat mehr Freiheitsgrade. Somit können mehr kollisionsfreie Wege berechnet werden und eine höhere Verkehrsdichte ist möglich.

Bei der Planung von Fahrstrecken/ Transportwegen spielen eine Vielzahl von Randbedingungen an die Durchführung des Transports eine Rolle, wie z.B.
- Zeitlich (bspw. zeitlich abgestimmtes Verhalten mit Produktionsmaschinen)
- Geometrisch (bspw. der dynamische Flächenbedarf des Mobils, insbesondere, wenn das das Mobil Anhänger aufweist (Schleppkurve))
- Kinematisch (bspw. Einhalten maximaler Beschleunigungswerte)
- Topologisch (bspw. Vermeidung bestimmter Bereiche wegen Kontaminationsgefahr für das Produkt)
- Logistisch (bspw. Priorisierung von Transporten)
- Optimalität (bspw. Vermeidung von Verzögerungen durch Ausweichen von anderen Mobilen).

Diese Randbedingungen werden bislang nur vereinfacht betrachtet. Der übliche Lösungsansatz aus dem Stand der Technik ist die Definition von Wegpunkten und die Berechnung einer Bewegungstrajaktorie durch alle Wegpunkte. Dies hat zwei wesentliche Einschränkungen:
1. Es kann aus mathematischen Gründen nur eine begrenzte Zahl von Randbedingungen beachtet werden.
2. Die Eigenschaften des Mobils müssen bei der Entwicklung des Verfahrens bekannt sein. D.h. wenn beim Betrieb wesentliche Faktoren geändert werden (andere Mobile, längere Züge, größere Produkte, ...), dann muss ggf. das Verfahren angepasst werden.

Das vorgeschlagene Verfahren adressiert diese Probleme: Ein Gedanke ist es somit, dass das Verfahren zur Bestimmung von Fahrstrecken/ Transportwegen nicht unmittelbar auf die Eigenschaften des Mobils aufbaut, sondern auf einfache Grundbewegungen als Bewegungsprimitive, (bspw. "Vorwärts", "Linkskurve", "Rechtskurve") die seitens des Mobils möglich sind. Das Verfahren hat somit nicht mehr das Ziel, die gesamte Fahrstrecke/ den gesamten Transportweg unter Einhaltung aller Randbedingungen zu berechnen, sondern kann die Bewegung stückweise aus zulässigen Bewegungsprimitiven zusammensetzen.

Neue Eigenschaften von dem Mobil und/oder der Topologie der Umgebung können ohne Änderung des Verfahrens berücksichtigt werden, indem die Menge oder der Datensatz möglicher Bewegungsprimitive angepasst wird.

Da sowohl der Ausgangspunkt und der Zielpunkt sowie Startpunkt und Endpunkt jeweils als Knoten ausgebildet sind und der Startpunkt und der Endpunkt jeweils mit einer Trajektorie verbunden ist, ist es bevorzugt, dass die Fahrstrecke/ der Transportweg über einen graphenbasierten Suchalgorithmus basierend auf den Knoten und verbindende Kanten bestimmt wird. Derartige graphenbasierte Suchalgorithmen haben die Eigenschaft, in einem Graphen die nach bestimmten Vorgabekriterien optimale Fahrstrecke/ den optimalen Transportweg zu bestimmen. Derartige graphenbasierte Suchalgorithmen sind weit verbreitet, so dass das Verfahren mit bekannten Bestimmungsalgorithmen einfach und verlässlich umsetzbar ist.

Bei einer bevorzugten Konkretisierung wird die Fahrstrecke/ der Transportweg über einen A*- Algorithmus als Bestimmungsalgorithmus bestimmt. Insbesondere dient der A*-Algorithmus zur Berechnung eines kürzesten Pfades entlang der Kanten zwischen zwei Knoten in einem Graphen. Alternativ kann der Dijkstra-Algorithmus verwendet werden. Der A*-Algorithmus gehört zur Klasse der informierten Suchalgorithmen. Er dient in der Informatik der Berechnung eines kürzesten Pfades zwischen zwei Knoten in einem Graphen mit positiven Kantengewichten. Im Gegensatz zu uninformierten Suchalgorithmen verwendet der A*-Algorithmus eine Schätzfunktion (Heuristik), um zielgerichtet zu suchen und damit die Laufzeit zu verringern.

Erfindungsgemäß sind die Bewegungsprimitive in einem Rastermaß von einem gemeinsamen, regelmäßigen, zweidimensionalen Punktraster anordenbar. Insbesondere sind die Bewegungsprimitive stets derart anordenbar, dass der der Startpunkt und der Endpunkt auf einem Punkt des Punktrasters liegen. Das Rastermaß ist anwendungsabhängig insbesondere kleiner als 30 cm, vorzugsweise kleiner als 15 cm ausgebildet. Alternativ oder ergänzend ist das Rastermaß größer als 1 cm, vorzugsweise größer als 5 cm ausgebildet. Das Rastermaß bezeichnet den Abstand zwischen zwei benachbarten Punkten in dem Punktraster entlang der Rasterlinien. Durch die Reduktion der Bewegungsprimitive des Mobils auf das Punktraster werden zum einen die Möglichkeiten der Bewegungsprimitive eingeschränkt und zum andern der die Möglichkeiten der Fahrstrecke/ des Transportwegs reduziert. Auf diese Weise können die Bestimmungsalgorithmen besonders einfach umgesetzt werden. Start- und Endpunkt eines Bewegungsprimitivs liegen um ein ganzzahliges Vielfaches des Rastermaßes voneinander entfernt (in X und Y-Richtung).

Insbesondere wird die Fahrstrecke/ der Transportweg durch eine Kombination von Knoten, wobei die Knoten als Punkte in dem Punktraster ausgebildet sind, und Trajektorien, wobei die Trajektorien durch die Bewegungsprimitive repräsentiert sind, erzeugt oder gebildet. Somit wird die Fahrstrecke/ der Transportweg durch eine Kette von Knoten, welche über die Trajektorien verbunden sind, definiert. Alternativ oder ergänzend werden bei der Suche einer Fahrstrecke/ eines Transportwegs nur Knoten des Graphen in Betracht gezogen, die Endpunkt eines möglichen Bewegungsprimitivs sind, welches im aktuellen Knoten seinen Startpunkt hat.

Bei einer möglichen Weiterbildung der Erfindung weisen die Bewegungsprimitive jeweils eine Zeitinformation auf, wobei die Zeitinformation die zur Durchführung der Bewegung des Mobils entlang der Bewegungsprimitive benötigte Zeit beschreibt. Durch die Zeitinformation ist es möglich, die Fahrstrecke/ den Transportweg als den zeitlich kürzesten Weg zu bestimmen. Alternativ hierzu kann ein Kompromiss zwischen dem nach Längenmaß kürzestem Weg und nach dem Zeitmaß kürzesten Weg bestimmt werden.

Es ist erfindungsgemäß, dass die Bewegungsprimitive eine Flächeninformation aufweisen, wobei die Flächeninformation die zur Durchführung der Bewegung des Mobils entlang der Bewegungsprimitive benötigte Fläche beschreibt. Im Bewegungsprimitiv ist eine Menge von Begrenzungspunkten (relativ zum Startpunkt und/oder Endpunkt) hinterlegt, die zur Durchführung der Bewegung exklusiv für das Mobil zur Verfügung stehen muss. Die Begrenzungspunkte sind in dem Rastermaß anordenbar. Damit ist die Angabe der Begrenzungspunkte zusammen mit dem Rastermaß äquivalent zum Flächenbedarf. Insbesondere definiert die Flächeninformation eine Querausdehnung senkrecht zu der Trajektorie der jeweiligen Bewegungsprimitive. Anwendungsgerecht betrachtet haben die Mobile eine physikalische Breite, welche auch abhängig von der jeweiligen Ladung und/oder von einem oder mehreren etwaigen Anhänger sein kann. Durch die Berücksichtigung der Flächeninformation wird sichergestellt, dass die Fahrstrecke/ der Transportweg nur so geführt wird, dass das Mobil kollisionsfrei von dem Startpunkt zu dem Zielpunkt gelangen kann. Insbesondere können Kollisionen mit Störkonturen vermieden werden.

Der Flächenbedarf wird insbesondere während der Bestimmung gespeichert und geprüft. Es werden nur Bewegungsprimitive verwendet, bei denen es keinen Konflikt bzgl. Flächenbedarf (zum fraglichen Zeitpunkt) gibt. Ein Konflikt kann beispielsweise durch die Bewegung eines anderen Mobils entstehen.

Um den rechnerischen Bestimmungsaufwand gering zu halten, ist es bevorzugt, dass die Bewegungsprimitive mit der Flächeninformation flächig in dem Rastermaß von dem Punktraster anordenbar sind. Insbesondere sind die Begrenzungspunkte eines Bewegungsprimitivs um ein ganzzahliges Vielfaches des Rastermaßes voneinander und von den Start- und Endpunkt entfernt (in X und Y-Richtung).

Mit dieser Vorgabe können die Fahrstrecken/ die Transportwege in den Bestimmungsalgorithmen besonders einfach geplant werden.

Es ist besonders bevorzugt, dass bei der Bestimmung der Fahrstrecke/ des Transportwegs der zeitabhängige Flächenbedarf der Fahrstrecke/ des Transportwegs bestimmt und optional ergänzend geprüft wird. Für den zeitabhängigen Flächenbedarf können sowohl die Zeitinformation als auch die Flächeninformation der Bewegungsprimitive herangezogen werden. Insgesamt wird eine Fahrstrecke/ ein Transportweg gebildet, der zeitabhängig den Flächenbedarf entlang der Trajektorie und/oder der Gesamttrajektorie beinhaltet.

Bei einer Vereinfachung wird das Bewegungsprimitiv in beliebige Zeitabschnitte aufgeteilt, wobei für die Zeitabschnitte jeweils der Flächenbedarf entlang der Trajektorie des Bewegungsprimitivs bestimmt wird. Während eines Zeitabschnitts wird der Flächenbedarf entlang der Trajektorie in dem Zeitabschnitt als quasi-stationäre Störkontur bei der Kollisionsprüfung verwendet. Beispielsweise wird das Bewegungsprimitiv in zwei oder n gleich große Zeitabschnitte aufgeteilt, wobei während des ersten Zeitabschnitts der Flächenbedarf entlang der Trajektorie in dem ersten Zeitabschnitt als quasi-stationäre Störkontur und während des oder der weiteren Zeitabschnitt (e) der Flächenbedarf entlang der Trajektorie in dem oder der weiteren Zeitabschnitte als quasi-stationäre Störkontur bei der Kollisionsprüfung verwendet wird. Insbesondere führt jeder einzelne Knoten des Bewegungsprimitivs eine Liste mit Zeitintervallen, in denen er reserviert ist. Damit ein Bewegungsprimitiv zulässig ist, müssen alle verwendeten Knoten im fraglichen Zeitfenster bei der Kollisionsprüfung "frei" sein. Je genauer der Zeitbedarf für jeden einzelnen Knoten bekannt ist, um so effizienter kann die Fläche genutzt werden.

Besonders bevorzugt wird bei der Bestimmung der Fahrstrecke/ des Transportwegs eine Kollisionsprüfung durchgeführt. Für eine Kollisionsprüfung mit stationären Objekten ist ein zeitunabhängiger Flächenbedarf ausreichend. Allerdings ist die Umgebung des Mobils im Bereich der Fahrstrecke/ des Transportwegs nicht unbedingt stationär, sondern weist quasi-stationäre Objekte, wie neue oder sich verändernde Anordnungen von Objekten, wie zum Beispiel Lagergut, auf. Durch die Bestimmung des zeitabhängigen Flächenbedarfs entlang der Gesamttrajektorie kann in einfacher Weise eine Kollisionsprüfung des Mobils mit der Umgebung, insbesondere den quasi-stationären Objekten durchgeführt werden.

Alternativ oder ergänzend hierzu sind in der Umgebung auch dynamische Objekte vorhanden, wie zum Beispiel weitere selbstständig fahrende, unbesetzte Mobile. Diese dynamischen Objekte bilden somit auch dynamische Störkonturen, die bei der Bestimmung der Fahrstrecke/ des Transportwegs berücksichtigt werden müssen. Durch die Bestimmung des zeitabhängigen Flächenbedarfs entlang der Gesamttrajektorie kann in einfacher Weise eine Kollisionsprüfung des Mobils mit anderen Mobilen durchgeführt werden.

Es ist besonders bevorzugt, dass in dem Verfahren mindestens zwei die Fahrstrecken/ Transportwege von mindestens zwei unterschiedlichen Mobilen bestimmt werden. Durch die Bestimmung der mindestens zwei Fahrstrecken/ Transportwegen von mindestens zwei unterschiedlichen Mobilen kann der zeitabhängige Flächenbedarf entlang der Gesamttrajektorie von jedem Mobil in Abhängigkeit des anderen Mobils geprüft werden. Bei einer weiteren Verallgemeinerung des Verfahrens können in dem Verfahren n Fahrstrecken/ Transportwege von m unterschiedlichen Mobilen bestimmt werden, wobei durch die Bestimmung des zeitabhängigen Flächenbedarfs über eine Kollisionsprüfung sichergestellt werden kann, dass die Mobile nicht miteinander kollidieren.

Es ist besonders bevorzugt, dass den n unterschiedlichen Mobilen p unterschiedliche Datensätze der Bewegungsprimitive zugeordnet sind (n>2; p>2).

Insbesondere sind die Bewegungsprimitive oder der Datensatz der Bewegungsprimitive mobilabhängig ausgebildet, so dass beispielsweise bei einer Kurve als Bewegungsprimitive unterschiedliche Kurvenradien oder unterschiedlicher Beladungen bei unterschiedlichen Mobilen berücksichtigt können. In gleicher Weise können unterschiedliche Beschleunigungsfähigkeiten, unterschiedliche Flächeninformationen und/oder unterschiedliche Zeitinformationen etc. in den unterschiedlichen Datensätzen berücksichtigt werden.

Optional kann aus der Fahrstrecke/ dem Transportweg kinematische Eigenschaften des Mobils entlang der Fahrstrecke/ des Transportwegs, wie z.B. eine Beschleunigung des Mobils, insbesondere ein Anfahr- oder Bremsruck, eine Querbeschleunigung des Mobils aus den Parametern der Bewegungsprimitive abgeleitet werden und eine Zulässigkeitsprüfung der Fahrstrecke/ des Transportwegs für das Mobil umgesetzt werden. Übersteigen die kinematischen Eigenschaften vorgebbare Grenzwerte kann eine Änderung der Fahrstrecke/ des Transportwegs umgesetzt werden.

Die Bewegungsprimitive können die folgenden Grundbewegungen optional mit einer Parametrisierung umfassen:
- Geradeausfahrt, Parameter: z.B. Länge der Geradeausfahrt, Geschwindigkeit;
- Rechtskurve, Parameter: Kurvenradius, Länge der Einfahrt, Länge der Ausfahrt, Geschwindigkeit;
- Linkskurve, Parameter: Kurvenradius, Länge der Einfahrt, Länge der Ausfahrt, Geschwindigkeit;
- Querversatz, Parameter: Breite des Querversatzes, Länge der Einfahrt, Länge der Ausfahrt, Geschwindigkeit;
- temporärer Stillstand, Parameter: Dauer des Stillstands;
- Rotation des Mobils optional stehend oder überlagert mit einer Linearbewegung
- allgemein überlagerte Bewegungen.

Das Bewegungsprimitiv "temporärer Stillstand" kann als Ausnahme den gleichen Start- und Endpunkt aufweisen und dient z.B. zum Passierenlassen eines anderen Mobils oder eines anderen dynamischen Objekts.

Ferner kann es Spezialfälle geben, in denen eine überlagerte Bewegung erwünscht ist, besonders, wenn das Mobil ein Planarantrieb ist und mehr als nur Bewegung in x- und y-Richtung zulässt. Zum Beispiel z-Höhe ändern, Flüssigkeit schwenken, Anti-Schwapp Funktion etc..

Insbesondere wird die Fahrstrecke/ der Transportweg auf das Mobil übertragen, wobei das Mobil entlang der Fahrstrecke/ des Transportwegs fährt.

Insbesondere die Fahrstrecke/ der Transportweg auf das Mobil zum Steuern des Mobils entsprechend des Transportwegs übertragen.

Ein weiterer Gegenstand der Erfindung betrifft einen Manöverautomaten, insbesondere ausgebildet als eine digitale Datenverarbeitungseinrichtung, wobei dieser ausgebildet ist, das Verfahren auszuführen, wie dies zuvor beschrieben wurde.

Ein weiterer Gegenstand der Erfindung betrifft ein Computerprogramm, welches ausgebildet ist, das zuvor beschriebene Verfahren durchzuführen, wenn das Computerprogramm auf einer digitalen Datenverarbeitungseinrichtung und/oder auf dem Manöverautomaten ausgeführt wird.

Ein weiterer Gegenstand der Erfindung betrifft ein maschinenlesbares Speichermedium mit dem Computerprogramm.

Weitere Vorteile, Merkmale und Wirkungen der Erfindung ergeben sich aus der nachfolgenden Beschreibung bevorzugter Ausführungsbeispiele der Erfindung sowie der beigefügten Figuren. Diese zeigen:
Figur 1 eine schematische Darstellung von einer Fahrstrecke/ einem Transportweg eines Mobils in einem Punktraster;
Figur 2 ein Flussdiagramm als ein Ausführungsbeispiel des Verfahrens.

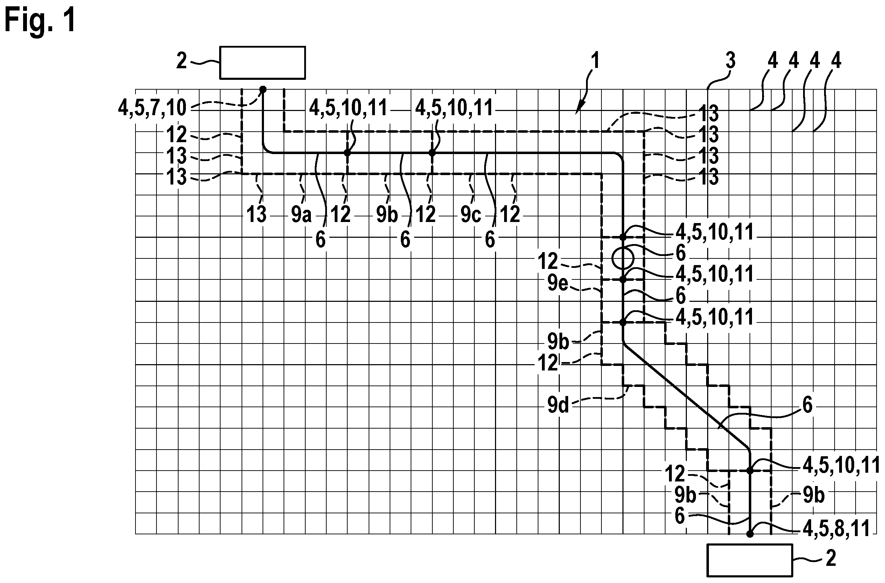

Die Figur 1 illustriert die Umsetzung eines Verfahrens zur Bestimmung von einer Fahrstrecke/ einem Transportweg 1 für mindestens ein selbstständig fahrendes, unbesetztes Mobil 2.

Die Fahrstrecke wird im Folgenden ohne Beschränkung der Allgemeinheit als Transportweg 1 bezeichnet. Der Transportweg 1 ist in einem Punktraster 3 angeordnet, welches eine Mehrzahl von Punkten 4 aufweist, welche regelmäßig in X-Richtung und Y- Richtung angeordnet sind. Das Rastermaß kann beispielsweise 10 cm betragen. Die Punkte 4 in dem Punktraster 3 dienen als mögliche Positionen von Knoten 5, welche gemeinsam mit dazwischenliegenden Trajektorien 6 den Transportweg 1 und/oder eine modellierte Gesamttrajektorie des Transportwegs 1 bilden. Der Transportweg 1 weist einen Ausgangspunkt 7 und einen Zielpunkt 8 auf, wobei der Ausgangspunkt 7 und der Zielpunkt 8 jeweils einen der Knoten 5 auf einem Punkt 4 des Punktrasters 3 bilden.

Der Transportweg 1 besteht aus einer Aneinanderreihung von Bewegungsprimitiven 9 a - e. Die Bewegungsprimitive 9 a - e weisen jeweils einen Startpunkt 10 und einen Endpunkt 11 auf. Der Startpunkt 10 und der Endpunkt 11 bilden jeweils einen der Knoten 5 auf einem der Punkte 4 des Punktrasters 3. Der Startpunkt 10 und der Endpunkt 11 eines gemeinsamen Bewegungsprimitivs 9 a - e sind über eine der Trajektorien 6 miteinander verbunden.

Der Startpunkt 10 des ersten Bewegungsprimitivs 9a entspricht dem Ausgangspunkt 7, der Endpunkt 11 des letzten Bewegungsprimitivs 9 a - e entspricht dem Zielpunkt 8. Bei aufeinanderfolgenden Bewegungsprimitiven 9 a - e bilden der Endpunkt 11 des vorhergehenden Bewegungsprimitivs 9 a - e und der Startpunkt 10 des unmittelbar nachfolgenden Bewegungsprimitivs 9 a - e einen gemeinsamen Knoten 5.

Das Bewegungsprimitiv 9 a repräsentiert eine Linkskurve, das Bewegungsprimitiv 9 b repräsentiert eine Geradeausfahrt, das Bewegungsprimitiv 9 c repräsentiert eine Rechtskurve, das Bewegungsprimitiv 9 d repräsentiert einen Querversatz, das Bewegungsprimitiv 9 e repräsentiert einen temporären Stillstand.

Ferner ist in der Figur 1 bei jedem Bewegungsprimitiv 9 a - e eine Hüllkurve 12 eingetragen, welche den Flächenbedarf des Mobils 2 entlang des Transportwegs 1, insbesondere des jeweiligen Bewegungsprimitivs 9 a - e repräsentiert. Bildlich gesprochen nutzt das Mobil 2 beim Abfahren des Transportwegs 1 den dargestellten Flächenbedarf der Hüllkurve 12. In der Figur 1 ist eine Breite des Mobils 2 schematisch nur mit zwei Kästchen im Punktraster 3 dargestellt. Real betrachtet ist die Breite des Mobils 2 deutlich größer, so dass die Hüllkurve 12 für den Flächenbedarf eine Vielzahl von Kästchen im Punktraster 3 einnehmen wird. Der Flächenbedarf ist dem jeweiligen Bewegungsprimitiv 9 a - e als Flächeninformation zugeordnet und bildet damit einen datentechnischen Bestandteil des jeweiligen Bewegungsprimitivs 9 a - e. Beispielsweise können in jedem Bewegungsprimitiv 9 a - e Begrenzungspunkte 13 relativ zu dem Startpunkt 10 und/oder Endpunkt 11 eingetragen sein, wobei die Begrenzungspunkte 13 und der Startpunkt 10 und/oder Endpunkt 11 jeweils auf einem der Punkte 4 des Punktrasters 3 liegen. Die Begrenzungspunkte 13 sind in der Figur 1 nur teilweise eingezeichnet.

Zudem kann dem jeweiligen Bewegungsprimitiv 9 a - e eine Zeitinformation zugeordnet sein, welche den Zeitbedarf beschreibt, den das Mobil 2 zum Durchfahren des Bewegungsprimitivs 9 a - e jeweils benötigt.

Die Bewegungsprimitive 9 a - e umfassen somit mindestens:
- Start- und Endpunkt 10,11 des Bewegungsprimitivs 9 a - e.
- Die zur Durchführung der Bewegung benötigte Fläche (Hüllkurve 12), insbesondere in Form der Begrenzungspunkte 13.
- Die zur Durchführung der Bewegung benötigte Zeit.

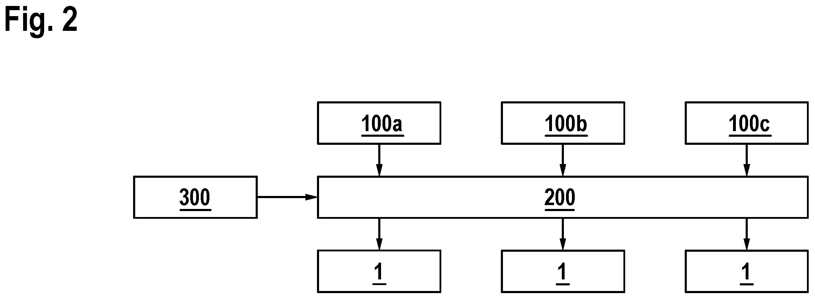

Die Figur 2 zeigt in einer schematischen Darstellung ein Flussdiagramm für das Verfahren zur Bestimmung von dem Transportweg 1 für das mindestens eine selbstständig fahrende, unbesetzte Mobil 2.

In einem Schritt 100 a, b, c wird für das Mobil 2 ein Datensatz an mobilspezifischen Bewegungsprimitiven 9 a - e bereitgestellt. Illustrierend sind drei unterschiedliche Schritte 100 a, b, c gezeigt, welche unterschiedliche Datensätze für unterschiedliche Mobile 2 repräsentieren sollen. Insbesondere unterscheiden sich die Bewegungsprimitive 9 a - e der unterschiedlichen Datensätze, da diese unterschiedlichen Mobilen 2 zugeordnet sind.

Der Datensatz kann eine beliebige Auswahl der in Zusammenhang mit der Figur 1 beschriebenen Bewegungsprimitive 9 a - e aufweisen. Es ist auch möglich, dass die Bewegungsprimitive 9 - e parametrisiert sind, um eine größere Auswahl für die Bestimmung von dem Transportweg 1 bereitzustellen. Die Bewegungsprimitive 9 a - e können wie folgt parametrisiert sein:
Bewegungsprimitiv 9a: Linkskurve, Parameter: Kurvenradius, Länge der Einfahrt, Länge der Ausfahrt;
Bewegungsprimitiv 9b: Geradeausfahrt, Parameter: z.B. Länge der Geradeausfahrt;
Bewegungsprimitiv 9c: Rechtskurve, Parameter: Kurvenradius, Länge der Einfahrt, Länge der Ausfahrt;
Bewegungsprimitiv 9d: Querversatz, Parameter: Breite des Querversatzes, Länge der Einfahrt, Länge der Ausfahrt;
Bewegungsprimitiv 9e: temporärer Stillstand, Parameter: Dauer des Stillstands.

Optional ergänzend mit Rotation der Mobile als überlagerte Bewegung.

In einem Schritt 200 wird der Transportweg 1 auf Basis des jeweiligen Bewegungsprimitivs 9 a - e erstellt z.B. über die Verwendung eines A*-Algorithmus als Bestimmungsalgorithmus bestimmt, wobei der A*-Algorithmus modifiziert ist, um die Zeitinformation bearbeiten zu können. Dabei werden die die Knoten 5 und dazwischenliegende Kanten (nicht gezeigt) verwendet. Bei der Bestimmung werden zum einen stationäre oder quasi-stationäre Objekte in der Umgebung berücksichtigt. Die stationären Objekte können beispielsweise durch ein Umgebungsmodell dargestellt werden. Zum anderen werden bei der Bestimmung andere Mobile als dynamische Objekte mit deren Transportwegen 1 ebenfalls berücksichtigt. Die Berücksichtigung erfolgt jeweils über eine Kollisionsprüfung mit den stationären, quasi-stationären und dynamischen Objekten. Zur Vermeidung von Kollisionen kann ein temporärer Stillstand des Mobils 2 in dem Transportweg 1 integriert werden, um ein anderes Mobil 2 passieren zu lassen.

Die Bestimmung der Transportwege 1 erfolgt über einen graphenbasierten Suchalgorithmus, wie zum Beispiel den (modifizierten) A*-Algorithmus. Dabei wird ausgenutzt, dass die Bewegungsprimitive 9 a - e jeweils als eine Kombination von Knoten 5 mit Kanten dargestellt sind.

Zur Vereinfachung der Bestimmung sind die Bewegungsprimitive 9 a - e an das Punktraster 3 derart angepasst sind, dass die Knoten 5 stets auf Punkten 4 des Punktrasters 3 liegen. Ferner sind die Hüllkurven 12 der Bewegungsprimitive 9 a - e ebenfalls so an das Punktraster 3 angepasst, dass die Begrenzungspunkte 13 auf den Punkten 4 des Punktrasters 3 angeordnet sind.

Derart beschriebene Bewegungsprimitive 9 a - e können nun von üblichen, graphbasierten Suchalgorithmen für kürzeste Wege (bspw. A*) mit wenigen Erweiterungen benutzt werden:
- Bei der iterativen Suche eines Transportwegs werden nur Knoten 5 des Graphen in Betracht gezogen, die Endpunkt 11 eines möglichen Bewegungsprimitivs 9 a - e sind, welches im aktuellen Knoten 5 seinen Startpunkt 10 hat.
- Der Flächenbedarf wird während der Suche gespeichert und geprüft. Es werden nur Bewegungsprimitive 9 a - e verwendet, bei denen es keinen Konflikt bzgl. Flächenbedarf (zum fraglichen Zeitpunkt) gibt. Ein Konflikt kann beispielsweise durch die Bewegung eines anderen Mobils 2 entstehen.

In einer Erweiterung sind zusätzlich folgende Ausgestaltungen möglich:
- Detailliertere Angabe des Flächen-/Zeitbedarfs, bspw. Flächenbedarf für die zeitlich erste Hälfte der Bewegung und die zeitlich zweite Hälfte der Bewegung eines Bewegungsprimitivs.
- Parameter der Bewegung eines Bewegungsprimitivs.
- Kinematische Eigenschaften (Beschleunigung, Ruck, möglicherweise umgesetzt als Funktion der Parameter).
- Vor- und Nachbedingungen. Bspw. ist aus dem Stillstand nur eine Beschleunigung möglich.

Vorteilhaft ist es insbesondere, dass das Verfahren zur Bestimmung von Transportwegen nicht direkt auf die Eigenschaften der Mobile 2 aufbaut, sondern auf einfache Grundbewegungen ("Bewegungsprimitive", bspw. "Vorwärts", "Linkskurve", "Rechtskurve") die seitens des Mobils 2 möglich sind. Das Verfahren hat somit nicht mehr das Ziel, den gesamten Transportvorgang unter Einhaltung aller Randbedingungen zu berechnen, sondern kann die Bewegung stückweise aus zulässigen Bewegungsprimitiven 9 a - e zusammensetzen. Hierdurch werden zwei wesentliche Vorteile erzielt:
1. Das Berechnungsverfahren wird erheblich vereinfacht. Es können bekannte und effiziente Verfahren wie der A*-Algorithmus mit geringen Modifikationen eingesetzt werden.
2. Neue Eigenschaften von den Mobilen 2, Produkt als Transportgut und Topologie der Umgebung können ohne Änderung des Berechnungsverfahrens berücksichtigt werden, indem die Menge möglicher Bewegungsprimitive 9 a - e angepasst wird.

## Patentansprüche

1. Verfahren zur Bestimmung einer Fahrstrecke, insbesondere eines Transportwegs (1), für mindestens ein selbstständig fahrendes Mobil (2),
wobei die Fahrstrecke einen Ausgangspunkt (7) und einen Zielpunkt (8) als Knoten (5) aufweist,
wobei dem Mobil (2) ein Datensatz an Bewegungsprimitiven (9 a - e) zugeordnet ist, wobei jedes Bewegungsprimitiv (9 a - e) einen Startpunkt (10) und einen Endpunkt (11) des Bewegungsprimitivs (9 a - e) als Knoten (5) aufweist und eine Trajektorie (6) repräsentiert, wobei die Trajektorie (6) den Startpunkt (10) mit dem Endpunkt (11) verbindet,
wobei die Bewegungsprimitive (9 a - e) mit den Knoten (5) in einem Rastermaß von einem gemeinsamen, regelmäßigen, zweidimensionalen Punktraster (3) anordenbar sind,
wobei die Bewegungsprimitive (9a - e) eine Flächeninformation aufweisen, wobei die Flächeninformation die zur Durchführung der Bewegung des Mobils (2) entlang der Bewegungsprimitive (9a - e) benötigte Fläche beschreibt, wobei im Bewegungsprimitiv (9a - e) eine Menge von Begrenzungspunkten (13) hinterlegt ist, die zur Durchführung der Bewegung exklusiv für das Mobil zur Verfügung stehen muss, wobei die Begrenzungspunkte (13) in dem Rastermaß anordenbar sind,
wobei die Fahrstrecke auf Basis der Bewegungsprimitive (9 a - e) bestimmt wird.

2. Verfahren nach Anspruch 1, **dadurch gekennzeichnet, dass** die Fahrstrecke über einen graphenbasierten Suchalgorithmus bestimmt wird.

3. Verfahren nach Anspruch 1 oder 2, **dadurch gekennzeichnet, dass** die Fahrstrecke über einen A*-Algorithmus bestimmt wird.

4. Verfahren nach einem der vorhergehenden Ansprüche, **dadurch gekennzeichnet, dass** die Fahrstrecke durch eine Kombination von Knoten (59, wobei die Knoten (5) als Punkte (4) in dem Punktraster (3) ausgebildet sind, und Trajektorien (6), wobei die Trajektorien (6) als die Bewegungsprimitive (9 a - e) ausgebildet sind, erzeugt ist.

5. Verfahren nach einem der vorhergehenden Ansprüche, **dadurch gekennzeichnet, dass** die Bewegungsprimitive (9 a - e) eine Zeitinformation aufweisen, wobei die Zeitinformation die zur Durchführung der Bewegung des Mobils (2) entlang der Bewegungsprimitive (9 a - e) benötigte Zeit beschreibt.

6. Verfahren nach Anspruch 1, **dadurch gekennzeichnet, dass** die Bewegungsprimitive (9 a - e) mit der Flächeninformation flächig in dem Rastermaß von dem Punktraster (3) anordenbar sind.

7. Verfahren nach Anspruch 1 oder 6, **dadurch gekennzeichnet, dass** bei der Bestimmung der Fahrstrecke der zeitabhängige Flächenbedarf der Fahrstrecke bestimmt wird.

8. Verfahren nach einem der vorhergehenden Ansprüche, **dadurch gekennzeichnet, dass** in dem Verfahren mindestens zwei die Fahrstrecken von mindestens zwei unterschiedlichen Mobilen (2) bestimmt werden.

9. Verfahren nach Anspruch 8, **dadurch gekennzeichnet, dass** den mindestens zwei unterschiedlichen Mobilen (2) unterschiedliche Datensätze der Bewegungsprimitive (9 a - e) zugeordnet sind.

10. Verfahren nach Anspruch 7 bis 9, **dadurch gekennzeichnet, dass** bei der Bestimmung der Fahrstrecke eine Kollisionsprüfung mit anderen Mobilen (2), stationären Objekten und/oder quasi-stationären Objekten durchgeführt wird.

11. Manöverautomat, wobei der Manöverautomat programmtechnisch und/oder schaltungstechnisch ausgebildet ist, das Verfahren nach einem der vorhergehenden Ansprüche durchzuführen.

12. Computerprogrammprodukt, wobei das Computerprogrammprodukt ausgebildet ist, das Verfahren nach einem der Ansprüche 1 bis 10 durchzuführen, wenn das Computerprogrammprodukt auf einer digitalen Datenverarbeitungseinrichtung und/oder auf dem Manöverautomaten nach Anspruch 11 ausgeführt wird.

13. Maschinenlesbares Speichermedium, wobei auf dem Speichermedium das Computerprogrammprodukt nach Anspruch 12 gespeichert ist.

## Revendications

1. Procédé de détermination d'une trajectoire, en particulier d'un chemin de transport (1), pour au moins un mobile (2) se déplaçant de manière autonome,
la trajectoire présentant en tant que nœuds (5) un point de départ (7) et un point d'arrivée (8),
un ensemble de données de primitives de mouvement (9 a - e) étant associé au mobile (2), chaque primitive de mouvement (9 a - e) présentant en tant que nœuds (5) un point de début (10) et un point de fin (11) de la primitive de mouvement (9 a - e) et représentant une trajectoire (6), la trajectoire (6) reliant le point de début (10) au point de fin (11),
les primitives de mouvement (9 a - e) pouvant être agencées avec les nœuds (5) dans un pas de grille d'une grille de points (3) bidimensionnelle régulière commune,
les primitives de mouvement (9 a - e) présentant une information de surface, l'information de surface décrivant la surface requise pour l'exécution du mouvement du mobile (2) le long des primitives de mouvement (9 a - e), une quantité de points de délimitation (13) étant mémorisée dans la primitive de mouvement (9 a - e), laquelle quantité doit être exclusivement disponible pour le mobile pour l'exécution du mouvement, les points de délimitation (13) pouvant être agencés dans le pas de grille,
la trajectoire étant déterminée sur la base des primitives de mouvement (9 a - e).

2. Procédé selon la revendication 1, **caractérisé en ce que** la trajectoire est déterminée par l'intermédiaire d'un algorithme de recherche à base de graphe.

3. Procédé selon la revendication 1 ou 2, **caractérisé en ce que** la trajectoire est déterminée par l'intermédiaire d'un algorithme A*.

4. Procédé selon l'une quelconque des revendications précédentes, **caractérisé en ce que** la trajectoire est générée par une combinaison de nœuds (5), les nœuds (5) étant conçus sous forme de points (4) dans la grille de points (3), et de trajectoires (6), les trajectoires (6) étant conçues sous forme de primitives de mouvement (9 a - e).

5. Procédé selon l'une quelconque des revendications précédentes, **caractérisé en ce que** les primitives de mouvement (9 a - e) comportent une information temporelle, l'information temporelle décrivant le temps requis pour l'exécution du mouvement du mobile (2) le long des primitives de mouvement (9 a - e).

6. Procédé selon la revendication 1, **caractérisé en ce que** les primitives de mouvement (9 a - e) peuvent être agencées avec l'information de surface dans le pas de grille de la grille de points (3).

7. Procédé selon la revendication 1 ou 6, **caractérisé en ce que** le besoin de surface dépendant du temps de la trajectoire est déterminé lors de la détermination de la trajectoire.

8. Procédé selon l'une quelconque des revendications précédentes, **caractérisé en ce que**, conformément au procédé, au moins deux les trajectoires d'au moins deux mobiles (2) différents sont déterminées.

9. Procédé selon la revendication 8, **caractérisé en ce que** des ensembles de données différents des primitives de mouvement (9 a - e) sont associés aux-dits au moins deux mobiles différents (2).

10. Procédé selon l'une quelconque des revendications 7 à 9, **caractérisé en ce que** lors de la détermination de la trajectoire, un contrôle de collision avec d'autres mobiles (2), des objets stationnaires et/ou des objets quasistationnaires est effectué.

11. Automate de manœuvre, l'automate de manœuvre étant conçu par des techniques à base de logiciel et/ou de circuits pour mettre en œuvre le procédé selon l'une quelconque des revendications précédentes.

12. Produit programme informatique, le produit programme informatique étant conçu pour mettre en œuvre le procédé selon l'une quelconque des revendications 1 à 10 lorsqu'il est exécuté sur un dispositif de traitement de données numérique et/ou sur l'automate de manœuvre selon la revendication 11.

13. Support de stockage lisible par machine sur lequel est stocké le produit programme informatique selon la revendication 12.

## Claims

1. Method for determining a route, in particular a transport route (1), for at least one autonomously driving mobile unit (2),
the route comprising a starting point (7) and a destination (8) as nodes (5),
the mobile unit (2) having an assigned data set of movement primitives (9 a - e), each movement primitive (9 a - e) comprising a starting point (10) and a terminal point (11) of the movement primitive (9 a - e) as nodes (5) and representing a trajectory (6), the trajectory (6) connecting the starting point (10) to the terminal point (11),
the movement primitives (9 a - e) with the nodes (5) being able to be arranged in one grid dimension of a common, regular, two-dimensional point grid (3),
the movement primitives (9a - e) comprising area information, the area information describing the area required for performing the movement of the mobile unit (2) along the movement primitives (9a - e), the movement primitive (9a - e) containing a saved set of boundary points (13) that needs to be available exclusively to the mobile unit for performing the movement, the boundary points (13) being able to be arranged in the grid dimension,
wherein the route is determined on the basis of the movement primitives (9 a - e).

2. Method according to Claim 1, **characterized in that** the route is determined using a graph-based search algorithm.

3. Method according to Claim 1 or 2, **characterized in that** the route is determined using an A* algorithm.

4. Method according to one of the preceding claims, **characterized in that** the route is produced by a combination of nodes (5), the nodes (5) being in the form of points (4) in the point grid (3), and trajectories (6), the trajectories (6) being in the form of the movement primitives (9 a - e).

5. Method according to one of the preceding claims, **characterized in that** the movement primitives (9 a - e) comprise time information, the time information describing the time required for performing the movement of the mobile unit (2) along the movement primitives (9 a - e).

6. Method according to Claim 1, **characterized in that** the movement primitives (9 a - e) with the area information are able to be arranged two-dimensionally in the grid dimension of the point grid (3).

7. Method according to Claim 1 or 6, **characterized in that** determining the route involves the time-dependent area requirement of the route being determined.

8. Method according to one of the preceding claims, **characterized in that** the method involves at least two the routes of at least two different mobile units (2) being determined.

9. Method according to Claim 8, **characterized in that** the at least two different mobile units (2) have different assigned data sets of the movement primitives (9 a - e).

10. Method according to Claims 7 to 9, **characterized in that** determining the route involves a check for collision with other mobile units (2), stationary objects and/or quasi-stationary objects being performed.

11. Automatic manoeuvrer, the programming and/or circuitry of the automatic manoeuvrer being designed to carry out the method according to one of the preceding claims.

12. Computer program product, the computer program product being designed to carry out the method according to one of Claims 1 to 10 when the computer program product is executed on a digital data processing device and/or on the automatic manoeuvrer according to Claim 11.

13. Machine-readable storage medium, the storage medium storing the computer program product according to Claim 12.
